# FASCICULE DE BREVET EUROPEEN

(11) **EP 3 414 480 B1**
(45) Date de publication et mention de la délivrance du brevet: **13.11.2019**
(21) Numéro de dépôt: 17702660.6
(22) Date de dépôt: 07.02.2017
(51) Int. Cl.: F16K 31/04, F16K 35/04, F16K 31/50

(54) **VANNE DE DOSAGE LINEAIRE**
LINEARES DOSIERVENTIL
LINEAR METERING VALVE

(30) Priorité: 09.02.2016 FR 1650999
(43) Date de publication de la demande: 19.12.2018
(73) Titulaire: Sonceboz Automotive SA, 2605 Sonceboz (CH)
(72) Inventeur: FOUCAUT, Antoine, 70190 Montarlot les Rioz (FR); KLEIN, Alban, 4600 Olten (CH)
(74) Mandataire: IP Trust
(86) Numéro de dépôt international: PCT/EP2017/052614
(87) Numéro de publication internationale: WO 2017/137384

(56) Documents cités:
- FR-A1- 3 021 819
- US-A- 6 039 300
- US-A1- 2004 026 175

## Description

### Domaine de l'invention

La présente invention concerne le domaine des vannes de dosage d'un fluide, comprenant une soupape se déplaçant linéairement, sous l'action d'un actionneur électromagnétique. De telles vannes sont notamment utilisées pour gérer les fluides d'un moteur thermique pour l'automobile.

Tous les moteurs thermiques pour automobile sont aujourd'hui équipés de système de dosage de fluide de différentes natures afin d'optimiser les rendements mécaniques ou de réduire les émissions polluantes.

Ces vannes de dosage sont le plus souvent commandées électriquement à partir de moteurs à courant continu ou d'actionneurs de type moteur couple.

Les vannes de dosage basées sur l'utilisation d'un moteur à courant continu associé à un réducteur mécanique offrent un niveau de fiabilité médiocre du fait de l'usure des balais du collecteur, mais aussi de l'usure des engrenages utilisés pour démultiplier le couple utile.

En revanche ces solutions bénéficient d'un cout de revient assez bas puisque utilisant un moteur de faible taille.

Elles constituent une grosse partie du marché des vannes EGR (acronyme de l'anglais «Exhaust gaz Recirculation», c'est-à-dire Recirculation des gaz d'échappement). Leurs inconvénients majeurs sont d'une part le manque de fiabilité et d'autre part l'encombrement pénalisé par l'intégration de la chaîne cinématique, qui aboutit à une vanne peu compacte difficile à intégrer sur le moteur.

Les groupes motopropulseurs des véhicules automobiles actuels intègrent de nombreuses vannes de dosage de fluides pour améliorer le rendement ou réduire les émissions polluantes. Ces vannes motorisées sont, soit de type rotatif, donc composées d'un volet mobile en rotation dans un conduit, soit de type linéaire, avec une soupape qui se déplace pour réguler le débit.

### Etat de la technique

On connaît par exemple dans l'état de la technique la demande de brevet européen EP 2742269 décrivant un dispositif de dosage comprenant :
- un corps de vanne muni d'un clapet adapté pour se déplacer entre une position de fermeture et une position d'ouverture,
- un axe de transmission ayant une première extrémité reliée au clapet et une seconde extrémité reliée à un élément de came
- un actionneur électrique rotatif comprenant un ensemble statorique et un ensemble rotorique rotatif autour d'un axe de rotation, l'ensemble rotorique comprenant une culasse magnétique portant un aimant rotorique.

L'ensemble rotorique comprend en outre un galet fixé sur la culasse magnétique, excentré par rapport à l'axe de rotation et positionné mobile dans l'élément de came de sorte à transformer le mouvement rotatif de l'ensemble rotorique en un mouvement de l'axe de transmission.

Un système de rappel en position de référence comportant un ressort lié à l'élément de came et au boitier permet de fermer la vanne en l'absence d'alimentation électrique de l'actionneur.

On connaît également le brevet européen EP1526271 décrivant une soupape présentant un entraînement en rotation, un mécanisme de rotation comprenant un élément d'entraînement, et un élément de soupape. L'élément d'entraînement présente un raccord tournant pour l'élément de soupape, au moins dans le sens de l'ouverture, de sorte que lors de l'ouverture, l'élément de soupape peut tourner avec l'élément d'entraînement, mais ne sont pas forcément mis en rotation avec lui.

On connaît aussi le brevet européen EP2650524 décrivant un système de recirculation des gaz d'échappement (EGR) avec une meilleure efficacité de l'espace, une meilleure stabilité, une force motrice maximisée et une méthode de fabrication de la came. Le système de recirculation des gaz d'échappement comprend un boîtier, un moteur d'entraînement pour générer une puissance, une unité de transmission de puissance relié au moteur d'entraînement pour transmettre la puissance générée par le moteur de commande, l'unité de transmission de puissance comprenant une pluralité d'engrenages, un arbre rotatif relié à l'un des engrenages constituant l'unité de transmission de puissance, une came d'actionnement relié à l'arbre rotatif de façon à se déplacer dans une direction de l'arbre rotatif en rotation, la came d'actionnement comportant une rainure de guidage qui y est formée, et un élément de soupape en liaison active avec la came d'actionnement de manière sélective ouvrir et fermer un canal d'écoulement de gaz d'échappement prévu dans le boîtier selon le fonctionnement de la came d'actionnement, une extrémité de l'élément de soupape étant en contact avec une partie supérieure de la rainure de guidage de la came d'actionnement de telle sorte que l'élément de soupape est actionné simultanément lorsque la came d'actionnement est mis en rotation.

On connaît enfin la demande de brevet US2013139503 mécanisme de commande pour un élément d'actionnement réglable peut comprendre un actionneur destiné à produire des forces d'entraînement. Un levier à genouillère peut être relié à l'élément d'actionnement par une première articulation à genouillère. Une transmission de force peut relier l'actionneur à levier à genouillère. Un élément de sortie côté sortie peut être montée pivotante sur une section de logement de support de l'unité d'actionnement. Le levier à genouillère peut être relié à l'élément de sortie par une seconde articulation à genouillère. Un support transversal peut être orienté transversalement à la direction du mouvement linéaire et configuré pour supporter au moins une de la genouillère et l'élément d'actionnement sur une section du logement de guidage du dispositif d'actionnement.

Le document FR3021819 montre aussi une vanne de dosage linéaire comprenant un moteur électrique 8 comportant un stator et un rotor 16 entraînant un arbre central 17 mobile selon sa direction axiale du rotor et portant à son extrémité un élément de fermeture, ladite vanne comprenant en outre un dispositif de rappel 20 en position de référence dudit arbre central 17.

### Inconvénients de l'art antérieur

Les vannes de dosages linéaires intégrant une fonction fail-safe comportent souvent un étage de réduction entre le moteur d'entrainement et la soupape commandée en translation.

Cet étage, en fonction de son ratio de réduction, peut présenter un fonctionnement faiblement réversible. C'est-à-dire qu'il est délicat de déplacer la soupape en exerçant sur elle un effort. Cela est dû au faible rendement inverse de la transformation de mouvement qui ne permet pas facilement d'entrainer le moteur et vaincre sa propre friction ajoutée au couple de rappel du ressort.

Au moment du montage de l'actionneur motorisé portant la soupape sur le bloc contenant le siège destiné à collaborer avec cet actionneur pour former la vanne de dosage, l'operateur ne peut pas serrer les vis de montage de l'actionneur sans faire reculer la soupape qui se trouve en appui sur le siège avant que l'actionneur motorisé ne soit plaqué sur le corps de vanne. Ceci est dû au fait que la course de l'actionneur motorisé doit nécessairement être supérieure à la course électrique de dosage de la vanne assemblée, pour garantir l'appui de la soupape sur son siège lorsque la vanne n'est pas alimentée.

Ainsi lors du serrage des vis maintenant l'actionneur sur le bloc comportant le siège, la soupape se trouve contrainte contre le siège avant que le boitier de l'actionneur atteigne sa position finale de fixation.

Lorsque la réversibilité de la cinématique de la vanne est bonne, l'effort nécessaire à ce décalage est faible et la soupape se décale lors du serrage sans trop de difficultés.

Lorsqu'au contraire la réversibilité de la vanne est plus difficile, due à un empilage défavorable de tolérances sur les composants, l'effort sur la soupape peut atteindre des valeurs très importantes capables de détériorer les composants de la cinématique de la vanne motorisée.

Ce phénomène est accentué par le fait que, lors du serrage de la vanne sur son support, l'effort exercé sur la soupape n'est pas aligné avec son axe car les différentes vis sont serrées successivement, et provoque un désalignement favorable à ce blocage de l'axe mobile portant la soupape par rapport au boitier de l'actionneur linéaire.

Ainsi, même lorsque la cinématique de la vanne est conçue pour être faiblement réversible, le défaut d'alignement de l'effort exercé par ce serrage ne permet pas le déplacement requis de l'axe de soupape et génère donc des contraintes destructrices dans la mécanique de la vanne.

Pour cette raison, les vannes de dosage linéaire électriques actuelles doivent être pilotées électriquement par le moteur rotatif pour décaler la soupape de sa position naturelle totalement sortie, avant d'être assemblées, ensuite il faut couper l'alimentation pour laisser la soupape revenir en appui sur son siège sous l'effet du ressort de rappel.

Cela est contraignant pour le montage à neuf, mais aussi pour le remplacement d'une telle vanne dans un garage qui n'a pas forcément connaissance de cette procédure à appliquer. Ce qui se traduit par des dégradations de pièces de rechange ou l'obligation de passer dans un garage spécialisé sur la marque du véhicule.

### Solution apportée par l'invention

Afin de réponse à ces inconvénients, l'invention concerne selon son acception la plus générale une vanne de dosage linéaire comprenant un moteur électrique comportant un stator et un rotor entraînant un arbre central mobile selon sa direction axiale du rotor et portant à son extrémité une soupape, ladite vanne comprenant en outre un dispositif de rappel en position de référence dudit arbre central, caractérisée en ce que ledit dispositif de rappel comporte un dispositif de blocage de la soupape liée à l'arbre central, dans une position située au-delà de sa course utile de dosage.

Avantageusement, ledit dispositif de blocage est constitué par une combinaison d'une excroissance d'un élément mobile intervenant dans la chaine cinématique entrainée par le rotor du moteur électrique, et d'une partie du boitier de l'actionneur, avec laquelle elle vient au contact.

Le coincement de la partie mobile avec la partie fixe permet de tenir une position avantageuse de la soupape (qui permet son montage sans risque) en dépit du couple de rappel exercé par le ressort.

Le mécanisme de blocage de l'arbre est réversible et il peut être déverrouillé à l'aide du couple exercé par le rotor du moteur lorsque le stator est alimenté.

Selon un mode de réalisation préférentiel, l'organe de blocage peut se présenter sous la forme d'une excroissance d'une pièce mobile en rotation qui se coince dans une partie fixe du boitier de l'actionneur.

L'organe de blocage peut également se présenter sous la forme d'une portion de l'axe mobile en translation, qui vient se clipper dans une partie fixe liée au boitier pour maintenir sa position en dépit des efforts axiaux générés par le ressort de rappel.

Selon une variante, le dispositif de blocage est constitué une gorge prévue sur l'arbre central qui collabore avec une contre-forme réalisée dans un partie de guidage de cet arbre, la combinaison de ces formes complémentaires permettant de réaliser un blocage de cet arbre central, dans une position de course qui se trouve au-delà de la position de pleine ouverture de la vanne de dosage, donc en dehors de la course utile de dosage de la vanne.

Cette solution présente, en comparaison des solutions de l'état de l'art les avantages suivants :
- L'operateur, lors de l'assemblage de la vanne motorisée sur son siège, peut manuellement entrainer l'axe de soupape en appliquant, soit un effort purement linéaire, soit en lui appliquant un mouvement hélicoïdal le cas échéant, pour positionner la soupape dans une position ouverte, donc décalée par rapport à sa position de sécurité imposée par le ressort de rappel (fermée).
- Il peut positionner et serrer la vanne sur son support sans risque de dégrader la vanne.
- Lors du démarrage du véhicule, l'alimentation électrique du moteur d'entrainement de la vanne, ajoutée à l'effort de rappel du ressort seront aptes à faire sortir l'axe de soupape de sa position de verrouillage, laquelle pourra alors reprendre un fonctionnement de dosage, de la position d'appui sur le siège jusqu'à à sa position de pleine ouverture, sans atteindre la position de verrouillage qui se trouve au-delà de la position de pleine ouverture. En effet le fonctionnement de ces vannes de dosage est basé sur un pilotage en boucle fermée et l'utilisation d'un capteur de position de la soupape permet de veiller à ne pas dépasser une position de pleine ouverture, et donc de stopper la course électrique avant d'atteindre la position de verrouillage mécanique.
- Ce type de verrouillage est très simple à réaliser et à utiliser, aucun outil ou équipement additionnel n'est nécessaire, il est donc très simple à mettre en œuvre soit lors du premier montage du véhicule, soit lors d'un remplacement de la vanne de dosage dans le cadre d'un service après-vente.

### Description détaillée d'un exemple non limitatif de réalisation

La présente invention sera mieux comprise à la lecture de la description qui suit, se référant à un exemple non limitatif de réalisation où :
- La figure 1 représente une vue en coupe d'une vanne selon un premier exemple de réalisation,
- La figure 2 représente une vue en coupe transversale au niveau de réducteur,-
- la figure 3 représente une vue éclatée du rotor et de l'organe de verrouillage,
- la figure 4 représente une vue schématique de la vanne,
- la figure 5 représente une vue en coupe longitudinale d'une variante de réalisation.

### Description d'un premier exemple de réalisation.

Le premier mode de réalisation non limitatif est une vanne électrique de dosage de fluide, comportant un moteur d'entrainement (1), un arbre central (2) coaxial avec l'axe du moteur d'entrainement. L'arbre central (2) est muni d'une soupape (4) fixée sur son extrémité. Un dispositif de transformation de mouvement (5) permet d'une part de transformer le mouvement rotatif du rotor (6) en un déplacement axial de la soupape (4) selon son axe, et d'autre part de réduire le mouvement de rotation du rotor (6) pour entrainer un moyeu (3) lié à un ressort de torsion (7), afin de réaliser la fonction de rappel en position de référence fermée (tige sortie en appui sur son siège) de ladite soupape (4).

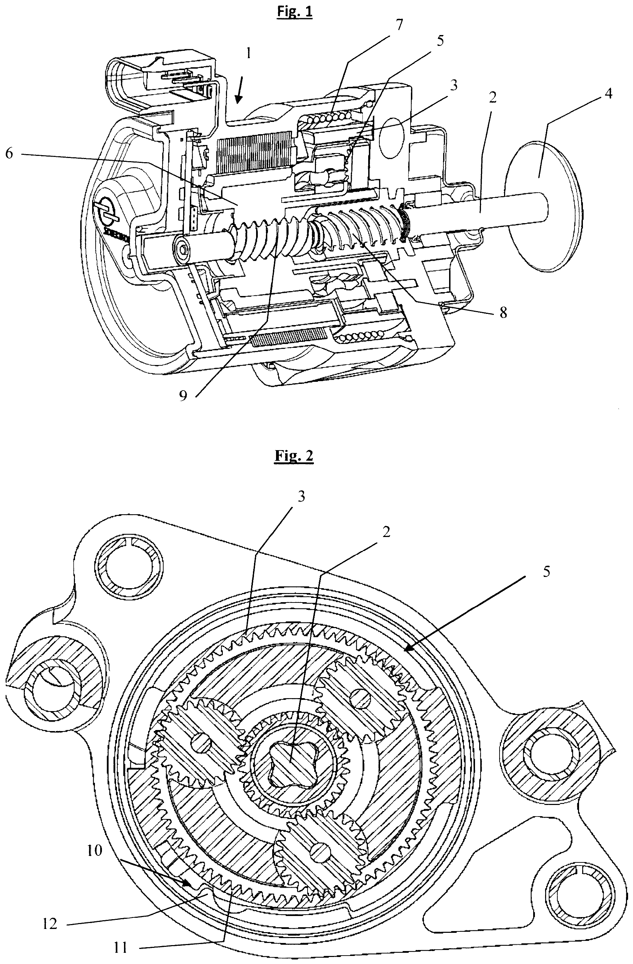

Dans le cas particulier de la solution selon le premier mode de réalisation (figure 1), l'utilisation d'une vis possédant deux hélices inversées (8, 9) permet de transformer le mouvement rotatif du rotor (6) en un mouvement hélicoïdal de l'arbre central (2). Seule la composante en translation de la soupape est utile pour le dosage du flux, mais ce type de transformation permet d'amplifier l'effort de fermeture par rapport au couple moteur disponible, comme cela est décrit dans le brevet FR3021819.

Le moyeu (3), présentant un engrenage à denture intérieure, lié au ressort de rappel (7), comporte des butées de fin de course, qui permettent d'une part, de pré-charger le ressort pour appliquer une force sur la soupape lorsqu'elle doit appuyer sur son siège sans courant dans le moteur, mais aussi à limiter la course de la vanne en ouverture, pour éviter de détériorer les filetages et les écrous en cas de dépassement de la course utile.

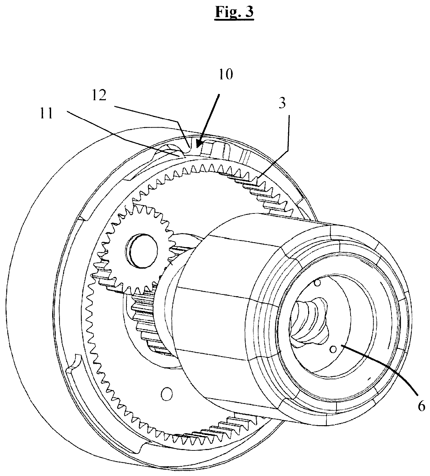

Selon un premier mode de réalisation (figures 2 et 3) une excroissance (11) plastique est réalisée sur le moyeu (3) portant le ressort (7), conçue selon une forme de « coin » apte à venir se coincer contre une partie du boitier fixe (12) englobant ce moyeu, pour former le dispositif de blocage (10). La position angulaire du moyeu correspondant à la position de blocage se situe au-delà de la course utile électrique de la vanne de dosage. De cette façon, le fonctionnement du dosage sur sa course « électrique » n'est pas perturbé par cette interférence.

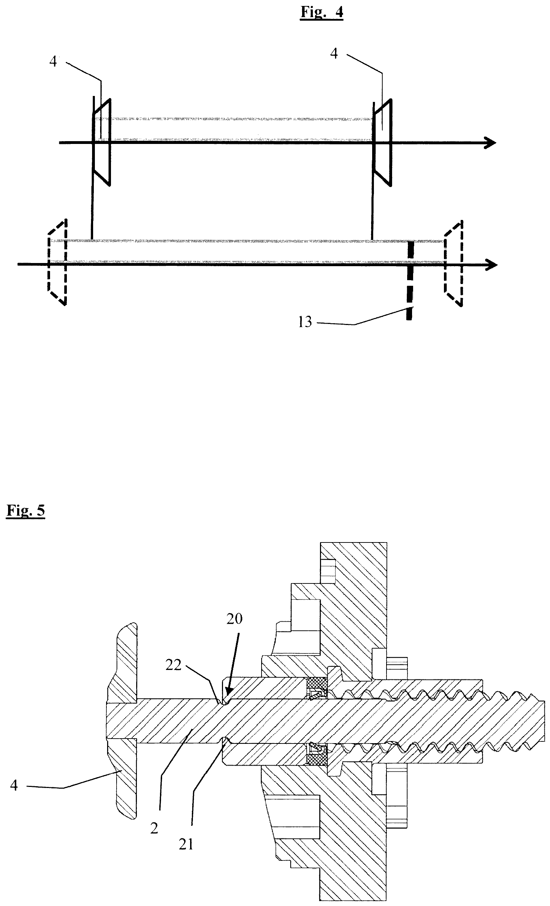

Le blocage intervient dans une position de la soupape (4) qui se trouve plus éloigné du siège que la position de pleine ouverture du dosage (figure 4) et cela permet donc de conserver un fonctionnement de dosage contrôlé sans risque de collision.

L'operateur peut, par un mouvement hélicoïdal appliqué directement sur la soupape (4), entrainer l'arbre central (2) et donc le rotor (6), le réducteur à engrenage (5), puis la couronne dentée (3), laquelle vient se coincer par arc-boutement contre la partie de boitier fixe (12). De par la forme donnée aux pièces en interaction, la friction permet le maintien dans cette position de l'ensemble des pièces mobiles de la vanne, et le ressort de rappel (7) n'est pas en mesure de faire revenir la soupape dans sa position de référence.

Des lors que cette manipulation de verrouillage en position complètement reculée est effectuée, il devient très simple de fixer la vanne sur son support comportant un siège, la visser sans risque de contraindre la soupape contre son siège, avant de rebrancher la vanne au faisceau du véhicule afin que le moteur crée, sous l'effet du courant, un couple magnétique qui s'ajoute au couple du ressort pour permettre au moyeu (3) supportant le ressort (7) de sortir de sa position de blocage et renvoyer la soupape dans sa position de référence, soit donc la position fermée contre le siège.

La figure 4 représente une vue schématique de la vanne avec, dans la partie supérieure du dessin, la situation pendant la course utile du dosage de la vanne : dans la partie gauche, correspondant à la fermeture de la vanne, la soupape (4) est appliquée contre le siège de la vanne et en assure la fermeture. Dans la partie droite, la vanne est ouverte et le flux maximum est atteint.

La partie inférieure du dessin correspond à la situation avant montage sur le siège. La marque (13) illustre le positionnement du verrouillage manuel dans la course du dispositif de pilotage.

Selon un second mode de réalisation, (figure 5) la vanne de dosage comporte un actionneur linéaire apte à déplacer un arbre central (2) portant une soupape en son extrémité. L'arbre central (2) comporte une forme, par exemple une gorge (22), qui collabore avec une contre-forme (21) réalisée dans un partie de guidage de cet arbre (2), la combinaison de ces formes (21, 22) permettant de réaliser un dispositif de blocage (20) de cet arbre central (2), dans une position de course qui se trouve au-delà de la position de pleine ouverture de la vanne de dosage, donc en dehors de la course utile de dosage de la vanne.

Au moins l'une de ces formes (21, 22) est réalisée dans une matière présentant des qualités d'élasticité permettant d'une part un verrouillage possible à l'aide d'un déplacement manuel de la soupape, pour faciliter son montage sur le siège, et d'autre part, de ressortir de cette position de verrouillage par le seul effet du couple rotor qui agit sur le déplacement de l'arbre central, lorsque celui-ci est alimenté, après avoir installé l'actionneur de soupape sur le corps de vanne possédant le siège. Ce dispositif de verrouillage peut être indifféremment positionné à l'avant ou à l'arrière de l'axe portant la soupape.

L'invention permet de réaliser une vanne de dosage à commande électrique, normalement fermée, comportant un dispositif de verrouillage manuel en position ouverte, qui permet sa fixation simple et sans risque sur l'ensemble comportant le siège avec lequel elle collabore.

Ce verrouillage est réalisé par une interférence entre un composant de la chaine cinématique de la vanne avec une partie de son boitier, dans une position qui se trouve en dehors de la course de dosage afin de ne pas gêner le fonctionnement normal de la vanne dans sa course « électrique ».

L'un des deux composants permettant de réaliser le blocage est réalisé dans une matière élastique permettant un déverrouillage par le simple effet du couple du moteur d'entrainement de ladite vanne.

L'invention ne se limite pas au mode de réalisation proposé lié à une vanne de dosage EGR mais peut s'appliquer à tout type de vanne présentant une fonction de rappel en position de référence fermée.

## Revendications

1. Vanne de dosage linéaire comprenant un moteur électrique comportant un stator et un rotor (6) entraînant un arbre central (2) mobile selon sa direction axiale du rotor (6) et portant à son extrémité une soupape (4), ladite vanne comprenant en outre un dispositif (5) de rappel en position de référence dudit arbre central **caractérisée en ce que** ledit dispositif de rappel (5) présente un dispositif de blocage (10, 20) de la soupape liée à l'arbre central (2), dans une position située au-delà de sa course utile de dosage.

2. Vanne de dosage linéaire selon la revendication 1 **caractérisée en ce que** ledit dispositif de blocage est constitué par une combinaison d'une excroissance (11) d'un élément mobile intervenant dans la chaine cinématique entrainée par le rotor du moteur électrique, et d'une partie du boitier (12) de l'actionneur, avec laquelle elle vient au contact.

3. Vanne de dosage linéaire selon la revendication 1 **caractérisée en ce que** ledit dispositif de blocage est constitué d'une gorge (22) prévue sur l'arbre central (2) qui collabore avec une contre-forme (21) réalisée dans un partie de guidage de cet arbre (2), la combinaison de ces formes (21, 22) permettant de réaliser un dispositif de blocage (20) de cet arbre central (2), dans une position de course qui se trouve au-delà de la position de pleine ouverture de la vanne de dosage, donc en dehors de la course utile de dosage de la vanne.

## Patentansprüche

1. Lineares Dosierventil, das einen Elektromotor mit einem Stator und einem Rotor (6) umfasst, der eine zentrale Welle (2) antreibt, die in der Axialrichtung des Rotors (6) beweglich ist und an ihrem Ende ein Ventil (4) aufweist, wobei das Ventil des Weiteren eine Vorrichtung (5) zum Rückholen der zentralen Welle in die Referenzposition umfasst, **dadurch gekennzeichnet, dass** diese Rückholvorrichtung (5) eine Vorrichtung (10, 20) zum Arretieren des mit der zentralen Welle (2) verbundenen Ventils in einer Position außerhalb ihres Dosier-Nennhubs aufweist.

2. Lineares Dosierventil nach Anspruch 1, **dadurch gekennzeichnet, dass** die Arretiervorrichtung aus der Ausstülpung (11) eines beweglichen Elements, das in die vom Rotor des Elektromotors angetriebene kinematische Kette eingreift, in Kombination mit einem Teil des Gehäuses (12) eines Stellglieds besteht, mit dem sie in Kontakt kommt.

3. Lineares Dosierventil nach Anspruch 1, **dadurch gekennzeichnet, dass** die Arretiervorrichtung aus einer auf der zentralen Welle (2) vorgesehenen Nut (22) besteht, die mit einer Gegenform (21) zusammenwirkt, die in einem Führungsbereich dieser Welle (2) ausgebildet ist, wobei die Kombination dieser Formen (21, 22) die Herstellung einer Arretiervorrichtung (20) für diese zentrale Welle (2) in einer Hubstellung ermöglicht, die über die vollständig geöffnete Stellung des Dosierventils hinaus geht, also außerhalb des Dosier-Nennhubs des Ventils liegt.

## Claims

1. Linear metering valve comprising an electric motor having a stator and a rotor (6) driving a central shaft (2) movable in its axial direction of the rotor (6) and carrying at its end a valve (4), said valve further comprising a return device (5) in the reference position of said central shaft, **characterized in that** said return device (5) has a locking device (10, 20) for locking the valve linked to the central shaft (2) in a position located beyond its useful metering stroke.

2. Linear metering valve according to claim 1, **characterized in that** said locking device consists of a combination of an outgrowth (11) of a movable element intervening in the kinematic chain driven by the rotor of the electric motor, and a part of the housing (12) of the actuator, with which it comes into contact.

3. Linear metering valve according to claim 1, **characterized in that** said locking device consists of a groove (22) provided on the central shaft (2) which collaborates with a counter-form (21) formed in a guide portion of this shaft (2), the combination of these forms (21, 22) making it possible to produce a locking device (20) of this central shaft (2), in a stroke position which is beyond the fully open position of the metering valve, thus outside the effective metering stroke of the valve.
